# EUROPEAN PATENT APPLICATION

(11) **EP 2 605 165 A1**
(43) Date of publication of application: **19.06.2013**
(21) Application number: 11306681.5
(22) Date of filing: 15.12.2011
(51) Int. Cl.: G06F 21/00, G06F 3/048

(54) **Gesture based generation of a user identifier**

(71) Applicant: France Télécom, 75015 Paris (FR)
(72) Inventor: Hegab, Ashraf Samy, London, SE15 6QX (GB); De Belgeonne, Rudy, London, W6 0RA (GB); Reix, Fabrice, London, TW9 2EE (GB)
(74) Representative: Cabinet Plasseraud

(57) **Abstract**

The invention concerns a method for generating an identifier of a user for an application, the method being performed by a device of a user, the method comprising:
- intercepting an identification request for an alphanumerical identifier from a first application;
- providing a graphical user interface to invite the user to provide a gesture based input;
- acquiring a first gesture based input from the user ;
- using a database mapping gesture based inputs on alphanumerical identifiers to retrieve a first alphanumerical identifier based on the acquired first gesture based input;
- in response to the identification request, providing the retrieved first alphanumerical identifier.

## Description

The present invention generally relates to video recording and processing.

It finds applications, in particular while not exclusively, in electronic devices, such as laptops, personal computers, Smartphones and Personal Digital Assistants (PDAs).

Most of applications and accesses to websites generally require an identification/authentication of a user, in order to retrieve content the user is allowed to access or in order to access to a private account. Such an identification/authentication process is performed by entering a user name (login or email address) and an associated password.

Nowadays, mobile phones such as Smartphones are often used to access such websites or to run such applications. To enter the user name and the password, an interface of the Smartphone is used, such as a keyboard or a virtual keyboard on a touch screen. In both cases, the keys have a small size so that they can all be contained in a restricted area of the Smartphone. Thus, when entering a user name and password, errors can be generated because of the inaccuracy of the key selection by a user. The user then has to delete the wrong characters and to reselect the right keys. In addition, passwords or user names are often required to contain capitals or numerals to enhance security, which also leads to increase the number of selections the user has to make (for example to switch between letters and numerals, or to select a capital mode).

Thus, there is a need to facilitate the identification and/or authentication of a user on a portable device.

To address these needs, a first aspect of the invention relates to a method for generating an identifier of a user for an application, the method being performed by a device of a user, the method comprising:
- intercepting an identification request for an alphanumerical identifier from a first application;
- providing a graphical user interface to invite the user to provide a gesture based input;
- acquiring a first gesture based input from the user ;
- using a database mapping gesture based inputs on alphanumerical identifiers to retrieve a first alphanumerical identifier based on the acquired first gesture based input;
- in response to the identification request, providing the retrieved first alphanumerical identifier.

The present invention enables to identify or authenticate a user of a device by a gesture based input that is pre-associated in a database with an alphanumerical identifier of a user, which can be the name of the user, an email address, a pseudonym, a password, etc. By alphanumerical identifier, it is meant any combination of characters from the ASCII code for example.

In addition, the method is transparent for a user, as an identification request originating from an application and intended to the user is intercepted before it is displayed on a screen of the device for example. Thus, a classical representation of an identification request such as one or several fields to be filled by the user with alphanumerical characters can be replaced by a graphical user interface that allows acquiring a gesture based input. A gesture based input can be obtained by acquiring a drawing of the user on a touch screen of the device, by determining a displacement of the device or an angle of the device relatively to a reference angle, etc. Each of these gesture based inputs can be mapped on a given identifier of the user, so that the identifier of the user is provided to the application from which the identification request is originating.

According to some embodiments of the invention, the method comprises:
- upon reception of a registration request from the user, providing a graphical user interface to invite the user to provide a gesture based input;
- acquiring a second gesture based input from the user;
- providing a graphical user interface to invite the user to input an alphanumerical identifier to be associated with the acquired second gesture based input;
- acquiring a second alphanumerical identifier from the user;
- mapping in the database the acquired second gesture based input on the input second alphanumerical identifier.

These embodiments enable to enhance the configurability of the method. Indeed, the user can determine the gestures he wants to associate with his email address or with a password for example. After having acquired an alphanumerical identifier and a gesture based input, they are stored in association in the database so that they can be used for future identification/authentication of the user.

In complement, after acquiring the second gesture based input, the method may comprise comparing the second gesture based input with the gesture based inputs that are mapped in the database, and if the second gesture based input is already mapped in the database, repeating the step of providing a graphical user interface to invite the user to provide a gesture based input.

This enables avoiding successively associating a gesture based input with two identifiers. For example if a given drawing on a touch screen is initially associated with both an email address and a password (corresponding to an identifier of the user), the user can not map the same given drawing on a new identifier. The step of inviting the user to input a gesture based input is thus repeated until a new gesture based input is acquired.

According to some embodiments of the invention, gesture based inputs and application identifiers are mapped on alphanumerical identifiers in the database, intercepting an identification request from the first application comprises retrieving a first application identifier of the first application, and the first alphanumerical identifier is retrieved from the database based on the acquired first gesture based input and the retrieved first application identifier.

This enables to adapt the mapping between a gesture based input and an alphanumerical identifier to a given application. For example, an application can be any application running on the device, such as a game application, social network application or a bank account management application for example, or can be a given website that can be accessed by the device. Thus, when the device accesses a website which requires an identification of the user via an identification request (such as a website dedicated to a social network or to messaging services), and when the user inputs a given gesture based input, the database enables to retrieve the alphanumerical identifier associated with the given gesture based input for this given website.

In complement, the method further comprises:
- providing a graphical user interface to invite the user to select an application to be associated with the input alphanumerical identifier and the acquired gesture based input;
- upon selection of a second application by the user, acquiring a second application identifier of the selected second application.

Both the acquired second gesture based input and the acquired second application identifier are mapped on the input second alphanumerical identifier in the database.

This enables to enhance the configurability of the invention by enabling the user to map both a gesture based input and an application identifier on an alphanumerical identifier.

According to some embodiments, the identifier of the user may be any combination of:
- a password;
- a user name;
- an email address.

A single identifier can therefore comprise several features concerning the user. Thus, the user can be identified and authenticated by inputting a single gesture based input.

A second aspect of the invention concerns a computer program product recorded on a storage medium and executable by a computer in the form of a software agent including at least one software module setup to implement the method according to any embodiment of the first aspect of the invention

A third aspect of the invention relates to a device for generating an identifier of a user for an application, the device comprising:
- an interception unit for intercepting an identification request for an alphanumerical identifier from a first application;
- a display unit for providing a graphical user interface to invite the user to provide a gesture based input;
- an acquisition unit for acquiring a first gesture based input from the user;
- a memory storing a database mapping gesture based inputs on alphanumerical identifiers for retrieving a first alphanumerical identifier based on the acquired first gesture based input.

The interception unit is further adapted to provide the first alphanumerical identifier retrieved by the memory, in response to the identification request.

According to some embodiments, the display unit and the acquisition unit are a touch screen, the touch screen is separated in a plurality of n subparts, n being greater or equal than unity, and, upon selection by the user of m subparts among the n subparts, m being less than or equal to n, the gesture based input is a sequence of n bits, each bit being associated with a given subpart of the screen, the bits of the sequence associated with selected subparts being equal to 1.

In complement, the number n of subparts may be configurable.

According to some embodiments, the acquisition unit comprises an accelerometer. The acquisition unit may also comprise a gyroscope.

The present invention is illustrated by way of example, and not by way of limitation, in the figures of the accompanying drawings, in which like reference numerals refer to similar elements and in which:
- Figure 1 represents a device according to some embodiments of the invention;
- Figures 2a to 2c represents a Graphical User Interface according to some embodiments of the invention;
- Figure 3 represents a flowchart representing the steps of a method according to some embodiments of the invention;
- Figure 4 represents a flowchart representing the steps of a method according to some other embodiments of the invention.

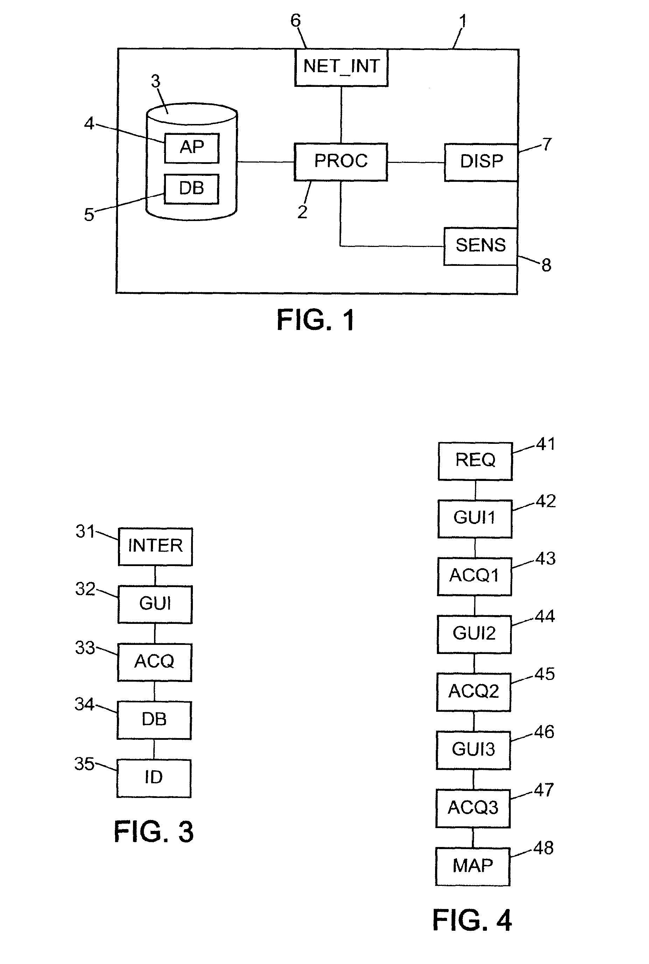

Referring to Figure 1, there is shown a user device 1 for generating an identifier of a user according to some embodiments of the invention.

The user device 1 can be any communication device and preferably a mobile device such as a laptop, a PDA or a mobile phone. In what follows, the user device 1 is considered as being a mobile phone such as a Smartphone.

The user device 1 comprises a processor 2, a memory 3 adapted to store a database 5 and applications 4, an interface 6 to communicate with a remote server via via Wi-Fi, 3G or a wired Internet connexion. The user device 1 further comprises a display unit 7 such as a screen, and sensors 8.

The user of the user device 1 can launch applications 4 that are stored in the memory 3 or access a given website on the Internet via the interface 6. Some applications and some websites require identification and/or an authentication to access some contents. For this purpose, an identification request can be received from applications 4 or from a distant server via the interface 6. Typical identification request which are processed by the processor 2 are displayed on the display unit 7 to require a login and a password in the form of alphanumerical characters from the user of the device 1.

According to the invention, such identification requests can be intercepted by the processor 2, which is adapted to provide a Graphical User Interface (GUI) on the display unit 7 to invite the user to provide a gesture based input instead of providing alphanumerical characters.

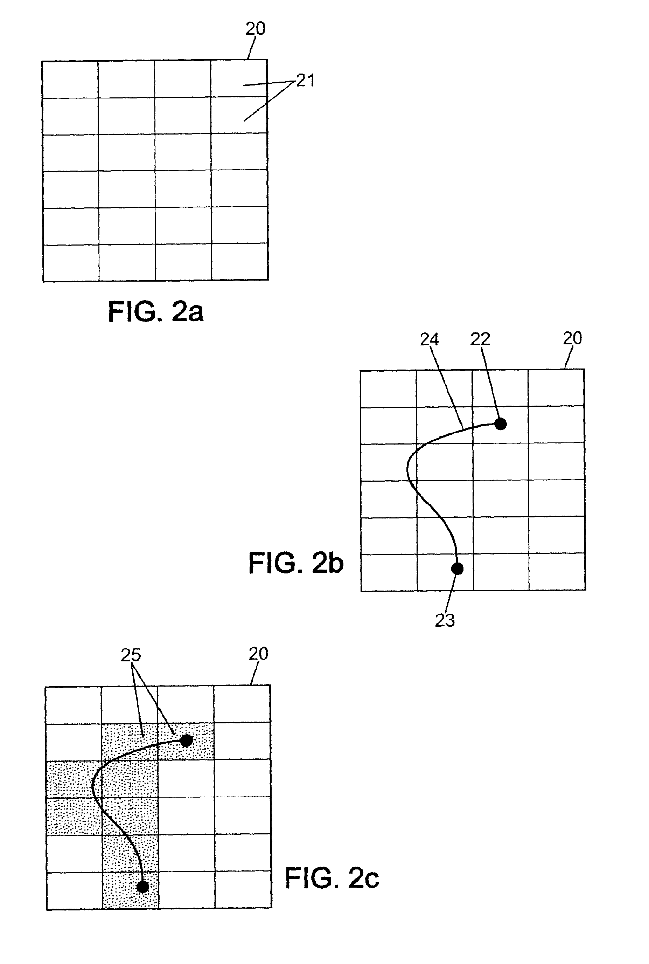

An example of GUI is represented by referring to Figure 2a to 2c. According to this specific example, the display unit 7 is a touch screen.

Referring to Figure 2a, the GUI is displayed on the touch screen in the form of a table 20 comprising a plurality of subparts, such as cells 21. No restriction is attached to how the touch screen in divided in subparts. For example, the subparts can be obtained by splitting a main circle in a plurality of concentric circles, each space between two concentric circles being divided in a plurality of cells by some radiuses of the main circle. According to other embodiments, the table 20 is split in a plurality of right triangles.

The user is thus invited to input a path touch on the touch screen, such as represented on Figure 2b.

Initially, the user places one finger at position 22 which is located in one of the cells 21 of the table 20. The finger of the user is then translated on the touch screen according to a given trajectory 24, and the user removes the finger from the touch screen at position 23. No restriction is attached to the trajectory 24 which is only given for the sake of better understanding.

A gesture based input can be acquired by the device based on the trajectory 24. For example, referring to Figure 2c, the device 1 can associate the trajectory of the user finger with the cells 25 which have been crossed by the user finger along trajectory 24.

Considering n cells, n being an integer greater than 1 (in the present case, n is equal to 20), a bit is associated to each of the n cells. Thus, a gesture based input is acquired by the device by selecting m cells and by obtaining a sequence of n bits, the bits of the sequence being associated with selected cells 24 being equal to 1, the other bits being equal to zero.

In the example represented on Figure 3c, the bit sequence can begin at the top right cell and can end at the bottom right cell. No restriction is attached to the order associated with the order in which the sequence is built. The resulting bit sequence is:
000001101100110001000100

The bit sequence is thus considered as a gesture based input of the user.

The gesture based input is transmitted to the processor 2, which can consult the database 5 which maps alphanumerical identifiers of the user (any combination of pseudonym, password, login) in association with gesture based inputs.

If the bit sequence that has been obtained is mapped on a given alphanumerical identifier, then the given alphanumerical identifier is retrieved by the processor 2, which can provide it to the application or the website having emitted to identification request. Thus, the present invention is transparent for the user, which only has to input a gesture based input. Such gesture based input avoids entering an alphanumerical identifier, which can require corrections from the user in case of a wrong character selection.

It is to be noted that the number n of subparts of the screen can be configurable. For example, if the confidentiality associated with an identifier (password of a bank account for example) is high, the number n of subparts can be increased, such that the bit sequence, which is acquired, is longer. If the confidentiality associated with an identifier is low, the number n of subparts can be decreased.

The number n of subparts can be configured by the user when the GUI is provided to invite the user to provide a gesture based input. According to some other embodiments, the processor 2 defines the number n of subparts based on the application or the website, for which the identification request has been intercepted.

The number n of subparts can also depend on the resolution of the display unit 7. For example, for a 320*480 resolution, a human finger generally occupies 32 pixels, which means that the most ideal table 20 would contain 150 cells 21 (15 by 10) for maximum touch screen space. This means that 150 combinations if one cell 21 is selected by user, 22500 for two selected cells, 3375000 for three selected cells and 500 millions for four selected cells. Thus, the probability to acquire two times the same gesture based input is reduced. This probability can be further reduced by introducing primary colours for example.

However, the invention is not restricted to a gesture based input in the form of a touch input on a touch screen. Indeed, as already explained, the device 1 further comprises sensors 8. Sensors 8 can be a gyroscope, an accelerometer or any other sensor.

For example, in the case of a gyroscope, the user can be invited to input a gesture based input, which consists in directing the device 1 in several successive directions (North, South, East, West). This results in a sequence of directions. Each direction can be associated with a sequence of two bits. For example, North corresponds to 00, East corresponds to 01, South corresponds to 10 and West corresponds to 11. A sequence of bits is thus obtained and considered as a gesture based input by the processor 2 to retrieve an alphanumerical identifier in the same way as previously explained. To improve the granularity, intermediate directions can be considered (North-West, South-West, etc).

In the case of an accelerometer, the gesture based input can correspond to a displacement of the device 1.

According to some complementary embodiments, in the database 5, both a gesture based input and an application identifier are mapped on an alphanumerical identifier. A first application identifier can be retrieved by the processor 2 upon intercepting the identification request from an application or from a website. A first gesture based input from the user is then acquired as previously explained, and the processor 2 is adapted to retrieve from the database 5 the alphanumerical identifier which is mapped on both the first gesture based input and the first application. This enables to have alphanumerical identifiers that are dedicated to a given application or a given website.

Referring to figure 3, there is shown a flowchart representing the steps of a method according to some embodiments of the invention.

At step 31, an identification request from an application or a website is intercepted by the processor 2. The identification request requires an alphanumerical identifier from a user of the device 1. According to some embodiments, the processor 2 retrieves an identifier of the application or of the website having emitted the identification request.

At step 32, a GUI is provided on the display unit 7 to invite the user to provide a gesture based input. The gesture based input can be acquired by sensors 8 or by the display unit 7, which can be a touch screen for example.

A gesture based input is then acquired at step 33, which can be expressed by a bit sequence as previously explained.

At step 34, the processor 2 retrieves from the database 5 an alphanumerical identifier, which is mapped on the acquired gesture based input (and on the application identifier according to some embodiments).

A step 35, the retrieved alphanumerical identifier is transmitted to the application or the website having emitted the identification request.

According to some embodiments, the user of the device can map alphanumerical identifiers on gesture based inputs and optionally on application identifiers. For this purpose, Figure 4 represents a flowchart according to some embodiments of the invention.

At step 41, the device 1 can receive a registration request from the user, to register a new gesture based input to be associated with a given alphanumerical identifier, and optionally with an application identifier.

At step 42, a GUI is provided on the display unit 7 to invite the user to provide a gesture based input.

At step 43, a second gesture based input can be acquired by the device 1 via sensors 8 or via the display unit 7, for example in the form of a bit sequence, and is retrieved to the processor 2. According to some embodiments of the invention, the processor can check in the database 5 that the second gesture based input is not already stored in the database 5. If the second gesture based input is already mapped on an alphanumerical identifier in the database, then the processor can display again the GUI to invite the user to provide a new gesture based input. This step is iterated until the user inputs a gesture based input that is not already stored in the database 5.

At step 44, a GUI is provided on the display unit 7 to invite the user to provide an alphanumerical identifier to be associated with the acquired second gesture based input.

At step 45, a second alphanumerical identifier is acquired by the device 1, via a keyboard or a virtual key board on a touch screen, and is retrieved to the processor 2. It is to be noted that the identifier can comprise a password, a login and/or an email address of the user for example.

Optionally, at step 46, a GUI can be provided on the display unit 7 to invite the user to provide an application identifier to be associated with the acquired second gesture based input and the acquired second alphanumerical identifier. For example, the device 1 can display on the display unit 7 a list of the applications 4 that are stored in the memory 3 and/or a list or favourite websites.

Upon selection by the user of a website or an application from these lists, a second application identifier is acquired by the device at step 47 and is retrieved to the processor 2.

At step 48, the processor 2 maps the second alphanumerical identifier on the second gesture based input and on the second application identifier in the database 5.

Thus, the configurability of the invention is enhanced as the user can define which alphanumerical identifier, which gesture based input and which application identifier he wants to map in the database 5. Upon reception of an identifier from a given application being associated with the second application identifier, the device can acquire the second gesture based input from the user to retrieve the second alphanumerical identifier to be transmitted to the given application.

No restriction is attached to the order in which the second gesture based input, the second alphanumerical identifier and the second application identifier are acquired. For example, the second alphanumerical identifier can be acquired before the second application identifier and the second gesture based input.

The present invention thus enables to render user portable devices more intuitive, by replacing acquisition of alphanumerical identifiers by intuitive gesture based inputs. In addition, a unique gesture based input can be associated with both a login and a password, for example, which facilitates the identification of the user and thus the access to an application account or to a website account.

## Claims

1. A method for generating an identifier of a user for an application, the method being performed by a device (1) of a user, the method comprising:
- intercepting an identification request for an alphanumerical identifier from a first application;
- providing a graphical user interface to invite the user to provide a gesture based input;
- acquiring a first gesture based input from the user;
- using a database (5) mapping gesture based inputs on alphanumerical identifiers to retrieve a first alphanumerical identifier based on the acquired first gesture based input;
- in response to the identification request, providing said retrieved first alphanumerical identifier.

2. The method according to claim 1, wherein the method comprises:
- upon reception of a registration request from the user, providing a graphical user interface to invite the user to provide a gesture based input;
- acquiring a second gesture based input from the user;
- providing a graphical user interface to invite the user to input an alphanumerical identifier to be associated with said acquired second gesture based input;
- acquiring a second alphanumerical identifier from the user;
- mapping in the database (5) the acquired second gesture based input on the input second alphanumerical identifier.

3. The method according to claim 2, wherein after acquiring the second gesture based input, the method comprises comparing the second gesture based input with the gesture based inputs that are mapped in the database (5), and wherein if the second gesture based input is already mapped in the database, repeating the step of providing a graphical user interface to invite the user to provide a gesture based input.

4. The method according to claim 1, wherein gesture based inputs and application identifiers are mapped on alphanumerical identifiers in the database (5), and wherein intercepting an identification request from the first application comprises retrieving a first application identifier of said first application, and wherein the first alphanumerical identifier is retrieved from the database based on the acquired first gesture based input and the retrieved first application identifier.

5. The method according to claim 2 or 3 and 4, wherein the method further comprises:
- providing a graphical user interface to invite the user to select an application to be associated with said input alphanumerical identifier and said acquired gesture based input;
- upon selection of a second application by the user, acquiring a second application identifier of the selected second application;
wherein both the acquired second gesture based input and the acquired second application identifier are mapped on the input second alphanumerical identifier in the database (5).

6. The method according to anyone of the preceding claims, wherein the identifier of the user is any combination of:
- a password;
- a user name;
- an email address.

7. A computer program product recorded on a storage medium and executable by a computer in the form of a software agent including at least one software module setup to implement the method according to any one of claims 1 to 6.

8. A device for generating an identifier of a user for an application, the device (1)comprising:
- an interception unit (2, 4, 6) for intercepting an identification request for an alphanumerical identifier from a first application;
- a display unit (7) for providing a graphical user interface to invite the user to provide a gesture based input;
- an acquisition unit (7, 8) for acquiring a first gesture based input from the user;
- a memory (3) storing a database (5) mapping gesture based inputs on alphanumerical identifiers for retrieving a first alphanumerical identifier based on the acquired first gesture based input,
wherein the interception unit is further adapted to provide the first alphanumerical identifier retrieved by the memory, in response to the identification request.

9. The device according to claim 8, wherein the display unit (7) and the acquisition unit (7, 8) are a touch screen, wherein the touch screen is separated in a plurality of n subparts (21), n being greater or equal than unity, and wherein, upon selection by the user of m subparts among the n subparts, m being less than or equal to n, the gesture based input is a sequence of n bits, each bit being associated with a given subpart of the screen, the bits of the sequence associated with selected subparts being equal to 1.

10. The device according to claim 9, wherein the number n of subparts (21) is configurable.

11. The device according to anyone of claims 8 to 10, wherein the acquisition unit (7, 8) comprises an accelerometer.

12. The device according to anyone of claims 8 to 11, wherein the acquisition unit (7, 8) comprises a gyroscope.
